# EUROPÄISCHE PATENTSCHRIFT

(11) **EP 1 605 711 B1**
(45) Veröffentlichungstag und Bekanntmachung des Hinweises auf die Patenterteilung: **06.09.2006**
(21) Anmeldenummer: 04102625.3
(22) Anmeldetag: 09.06.2004
(51) Int. Cl.: H04Q 7/20, H04Q 7/38

(54) **Verbinden eines sich bewegenden mobilen Netzwerkes mit einem drahtlosen Netzwerk**
Connecting a moving mobile network to a wireless network
Connecter un réseau mobile en mouvement avec un réseau sans fil

(43) Veröffentlichungstag der Anmeldung: 14.12.2005
(73) Patentinhaber: Swisscom Mobile AG, 3050 Bern (CH)
(72) Erfinder: Schädler, Michael, 4932 Lotzwil (CH); Gysi, Martin, 4053 Basel (CH)
(74) Vertreter: BOVARD AG

(56) Entgegenhaltungen:
- EP-A- 0 936 829
- US-A- 5 867 785
- KUMAZAWA M ET AL: "Router selection for moving networks" IEEE, 5. Januar 2004 (2004-01-05), Seiten 99-104, XP010696807
- LIANG X ET AL: "Mobile internet access for high-speed trains via heterogeneous networks" IEEE, Bd. 1, 7. September 2003 (2003-09-07), Seiten 177-181, XP010681580

## Beschreibung

Die vorliegende Erfindung bezieht sich auf ein Verfahren und ein System zur Verbindung eines mobilen Netzwerks mit einem drahtlosen Netzwerk. Insbesondere bezieht sich die Erfindung auf ein mobiles Netzwerk, welches sich mit einem mobilen Objekt mitbewegt, wobei das mobile Netzwerk mindestens zwei Schnittstellen für die Verbindung des mobilen Netzwerks mit dem drahtlosen Netzwerk umfasst, und wobei mindestens ein Parameter der Verbindungsqualität dieser Schnittstelle zum drahtlosen Netzwerk bestimmt wird, und wobei basierend auf diesem mindestens einen Parameter eine Verbindung zum drahtlosen Netzwerk aufgebaut wird.

Mobilfunknetze für die Mobilfunktechnologie ermöglichen mobilen Benutzern neben der Sprachkommunikation auch den Zugriff auf Dienste für die Datenkommunikation. Insbesondere in öffentlichen Verkehrsmitteln, beispielsweise Schienenbahnen wie Eisenbahnen (in diesem Dokument wird die Zugskomposition, welche sich auf einem Geleise fortbewegt, als Eisenbahn bezeichnet), U-Bahnen, Trams oder Magnetschwebebahnen, Autobussen, die auf Strassen eines Streckennetzes fahren, oder Schiffen, die auf Schifffahrtslinien verkehren, haben Benutzer genügend Zeit um Datendienste zu benützen und beispielsweise grössere Datenmengen aus dem Internet zu beziehen. Die Datendienste der heute verfügbaren Mobilfunknetze erlauben allerdings keine besonders grossen Datenübertragungsraten und eignen sich beispielsweise nicht für den Zugriff auf grosse Datenmengen wie Videodateien im Internet. Zudem muss jeweils für sämtliche Benutzer, die sich in einem Verkehrsmittel befinden, während der Fahrt ein individueller Wechsel von einer Funkzelle zu einer nächsten Funkzelle, ein so genanntes Handover, durchgeführt werden.

In der Patentanmeldung EP 1 209 928 A2 wird ein Server für Transportmittel mit mindestens einem drahtlosen Interface für die drahtlose Verbindung des Servers mit Benutzerterminals des Transportmittels sowie mindestens einem weiteren drahtlosen Interface für die drahtlose Verbindung des Servers mit einem externen Netzwerk beschrieben. Das drahtlose Interface für die Verbindung von Benutzerterminals ist bevorzugt ein Bluetooth Netzwerk. Das drahtlose Netzwerk für die Verbindung zu einem externen Netzwerk ist bevorzugt ein WCDMA Netzwerk oder ein Hiperlan Netzwerk, wobei insbesondere das Hiperlan Netzwerk an spezifischen Orten, so genannten Hot-Spots, wie beispielsweise Bahnhöfen, einen breitbandigen Netzwerkzugriff ermöglicht. Die Patentanmeldung EP 1 209 928 A2 hat jedoch den Nachteil, dass nur an diesen spezifischen Orten ein breitbandiger Netzwerkzugriff möglich ist.

In "Mobile Internet access for high-speed trains via heterogeneous networks", Liang X. et al, IEEE, Bd. 1, 7. September 2003, wird eine Netzwerkarchitektur zur Verbindung eines mobilen Netzwerks einer Eisenbahn mit einem Satellitennetzwerk (z.B. falls sich die Eisenbahn zwischen den Eisenbahnstationen auf dem freien Feld bewegt) oder mit einem WLAN Netzwerk (z.B. falls sich die Eisenbahn in einer Eisenbahnstation befindet) beschrieben. Es werden Szenarien für den Handover zwischen dem Satellitennetzwerk und dem WLAN Netzwerk beschrieben. Es ist jedoch ein Nachteil, dass in Eisenbahnstationen und längeren Tunnels für eine breitbandige Verbindung ein relativ hoher Aufwand der Netzwerkinfrastruktur benötigt wird.

In der Patentschrift US 5,867,785 wird eine Eisenbahn mit einem drahtlosen Netzwerk zur Datenkommunikation mit mobilen Terminals beschrieben. Das drahtlose Netzwerk ist über eine drahtlose Verbindung zwischen einer Basisstation der Eisenbahn mit Basisstationen eines stationären drahtlosen Netzwerks verbindbar. Mittels der Basisstation werden Kommunikationsresourcen zwischen dem drahtlosen Netzwerk der Eisenbahn und den mobilen Terminals der Eisenbahn zur Verfügung gestellt sowie entsprechende Kommunikationsresourcen zwischen der Basisstation und dem stationären Netzwerk nachgeführt. Es ist jedoch ein Nachteil, dass mit einem kleinen Aufwand der Netzwerkinfrastruktur nur eine relativ schmalbandige Verbindung herstellbar ist.

Es ist eine Aufgabe der vorliegenden Erfindung, ein neues Verfahren und System für die Verbindung eines mobilen Netzwerks mit einem drahtlosen Netzwerk vorzuschlagen, welche die Nachteile des Stands der Technik überwinden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen hervor.

Die oben genannten Ziele werden durch die vorliegende Erfindung insbesondere dadurch erreicht, dass ein mobiles Netzwerk, welches sich mit einem mobilen Objekt mitbewegt, mit einem drahtlosen Netzwerk verbunden wird, wobei das drahtlose Netzwerk eine Vielzahl von Basisstationen umfasst, und wobei für die Verbindung des mobilen Netzwerks mit dem drahtlosen Netzwerk im mobilen Objekt mindestens zwei, mit den Basisstationen drahtlos verbindbare Empfangs-/Sendevorrichtungen verwendet werden, und wobei pro Empfangs-/Sendevorrichtung mindestens ein Verbindungsqualitätsparameter dieser Empfangs-/Sendevorrichtung zu mindestens einer Basisstation des drahtlosen Netzwerks bestimmt wird, und wobei basierend auf diesem mindestens einen Verbindungsqualitätsparameter mindestens eine Verbindung zum drahtlosen Netzwerk aufgebaut wird. Es ist ein Vorteil eines solchen mobilen Netzwerks, dass dieses basierend auf mindestens einem Verbindungsqualitätsparameter über mindestens eine Verbindung mit einem drahtlosen Netzwerk verbunden werden kann.

In einer Ausführungsvariante wird die mindestens eine Verbindung zum drahtlosen Netzwerk basierend auf einem besonders geeigneten Verbindungsqualitätsparameters aufgebaut. Wie in nachfolgenden Ausführungsvarianten gezeigt wird, kann ein Signalenergieparameter als Verbindungsqualitätsparameter verwendet werden. Ist der Signalenergieparameter besonders hoch, dann kann der Verbindungsqualitätsparameter als besonders geeignet betrachtet werden und es kann deshalb von Vorteil sein, die diesem Parameter entsprechende Verbindung aufzubauen. Es ist ein Vorteil, dass eine Verbindung mit einem besonders geeigneten Verbindungsqualitätsparameter zu einer besonders geeigneten Verbindung des mobilen Netzwerks mit dem drahtlosen Netzwerk führen kann. Ist z.B. die Signalenergie besonders hoch, dann kann eine besonders stabile, zuverlässige oder breitbandige Verbindung aufgebaut werden.

In einer Ausführungsvariante wird das mobile Netzwerk gleichzeitig über mehrere Verbindungen mit dem drahtlosen Netzwerk verbunden. Es ist ein Vorteil, dass durch die gleichzeitige Verbindung des mobilen Netzwerks mit dem drahtlosen Netzwerk die Datenübertragungsrate und/oder die Stabilität verbessert werden kann.

In einer Ausführungsvariante wird als Verbindungsqualitätsparameter ein Signalenergieparameter und/oder ein Datendurchsatzgeschwindigkeitsparameter verwendet. Es ist ein Vorteil, dass Signalenergieparameter und/oder Datendurchsatzgeschwindigkeitsparameter mit handelsüblichen Empfangs-/Sendevorrichtungen bestimmbar sind. Der Verbindungsqualitätsparameter kann beispielsweise auch eine Zeitreihe von Signalenergieparametern umfassen, wobei während einer definierten Zeit und zu definierten Zeitpunkten der Signalenergieparameter bestimmt wird. Der Verbindungsqualitätsparameter kann beispielsweise auch eine geeignete Funktion zur Bestimmung einer Tendenz aus einer Zeitreihe von Signalenergieparametern umfassen.

In einer Ausführungsvariante werden Teile des mobilen Netzwerks als drahtgebundenes LAN Netzwerk und/oder als drahtloses WLAN, UMTS und/oder GPRS Netzwerk ausgeführt. Es ist ein Vorteil, dass die Ausführungsform des mobilen Netzwerks entsprechend der Endgeräte, welche im mobilen Objekt verwendet und an das mobile Netzwerk angeschlossen werden sollen, gewählt werden kann.

In einer Ausführungsvariante wird der mindestens eine Verbindungsparameter zu definierten Zeitpunkten oder nach Ablauf von definierten Zeitintervallen bestimmt. Es ist ein Vorteil, dass die Zeitpunkte für Erfassung der Verbindungsqualitätsparameter definierbar sind. So kann z.B. bei einem sich schnell bewegenden mobilen Objekt das Erfassungsintervall verkürzt oder bei einem sich langsam bewegenden Objekt das Erfassungsintervall vergrössert werden.

Die vorliegende Erfindung wird mit Hilfe der als Beispiel gegebenen Beschreibung besser verständlich und durch die beiliegenden Figuren veranschaulicht:
Die Figur 1 zeigt ein Schema der Vorrichtungen zur Ausführung des erfindungsgemässen Verfahrens, wobei sich das Objekt in einer planaren oder näherungsweise planaren Ebene bewegt.
Die Figur 2 zeigt ein Schema der Vorrichtung zur Ausführung des erfindungsgemässen Verfahrens, wobei das Objekt im Raum frei bewegbar ist.
Die Figur 3 zeigt ein Schema der Vorrichtung zur Ausführung des erfindungsgemässen Verfahrens, wobei ein Signalenergieparameter als Verbindungsqualitätsparameter bestimmt wird.
Die Figur 4 zeigt ein Schema der Vorrichtung zur Ausführung des erfindungsgemässen Verfahrens, wobei das mobile Objekt eine Eisenbahn ist.

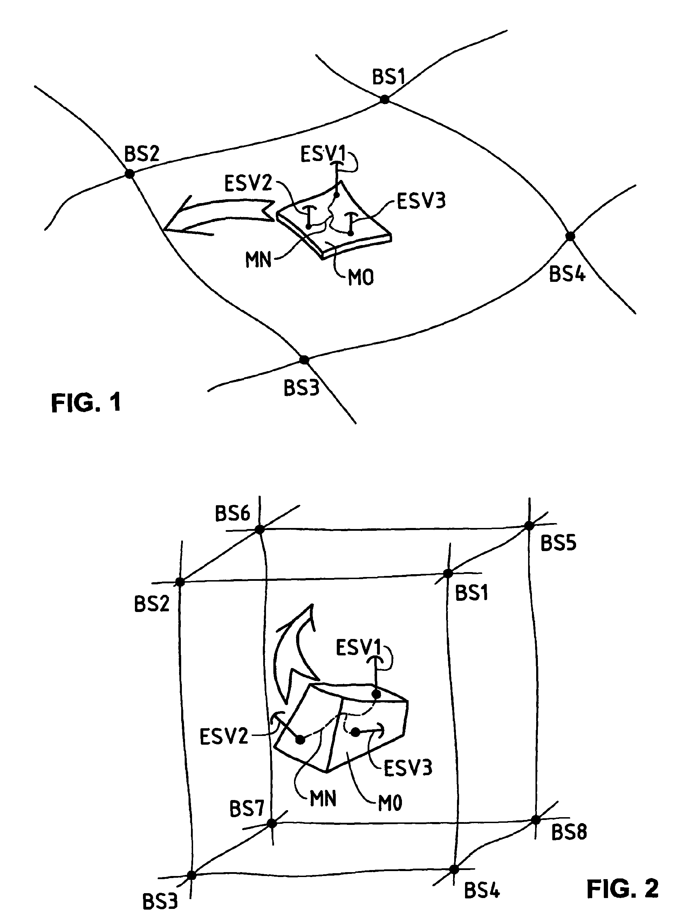

In Figur 1 beziehen sich die Bezugszeichen BS1, BS2, BS3 und BS4 auf beispielhaft gezeichnete Basisstationen des drahtlosen Netzwerks. Eine Basisstation kann eingerichtet sein um eine Vielzahl verschiedener drahtloser Netzwerke, wie beispielsweise ein WLAN Netzwerk, ein UMTS Netzwerk oder ein GPRS Netzwerk zur Verfügung zu stellen. Die Basisstation kann aber auch nur ein bestimmtes drahtloses Netzwerk, wie z.B. ein WLAN Netzwerk, zur Verfügung stellen. Die Basisstationen können untereinander über ein drahtgebundenes Netzwerk oder auch über ein drahtloses Netzwerk verbunden sein. Die Basisstationen können an netzwerktechnisch günstigen Standorten aufgestellt sein, wie z.B. an Bahnhöfen, entlang von Bahnstrecken oder an erhöhten Standorten, welche eine besonders weite Abdeckung eines Gebiets mit dem drahtlosen Netzwerk ermöglichen. In Figur 1 bezieht sich das Bezugszeichen MO auf ein mobiles Objekt. Das mobile Objekt kann eine Schienenbahn, eine U-Bahn, ein Autobus oder ein Schiff sein. Die erfindungsgemässe Lösung ist insbesondere für alle mobilen Objekte geeignet, welche eine Vielzahl von mit einem Netzwerk verbindbaren Endgeräten umfassen. Das Bezugszeichen MN bezieht sich auf das mobile Netzwerk, welches sich mit dem mobilen Objekt mitbewegt, wobei Endgeräte, welche sich auf dem mobilen Objekt befinden, mit dem mobilen Netzwerk verbindbar sind. Das mobile Netzwerk kann zumindest teilweise als drahtgebundenes Netzwerk, wie z.B. ein Ethernet, ausgeführt sein oder es kann zumindest teilweise als drahtloses Netzwerk, wie z.B. ein WLAN Netzwerk, ein UMTS Netzwerk oder ein GPRS Netzwerk ausgeführt sein. Das mobile Netzwerk ist vorzugsweise so ausgelegt, dass Endgeräte, die sich auf dem mobilen Objekt befinden, möglichst einfach mit dem mobilen Netzwerk verbindbar sind. In einer Eisenbahn kann z.B. das mobile Netzwerk als WLAN Netzwerk ausgestaltet sein, wobei Reisende ihr Laptop oder ihren Personal Digital Assistent über eine z.B. eingebaute WLAN Karte oder eine WLAN Zusatzkarte einfach mit dem mobilen Netzwerk verbinden können. Die Bezugszeichen ESV1, ESV2 und ESV3 beziehen sich beispielhaft auf Empfangs-/Sendevorrichtungen, welche am mobilen Objekt angebracht sind und welche eine drahtlose Verbindung zu Basisstationen ermöglichen. Vorzugsweise werden die Empfangs-/Sende-vorrichtungen am mobilen Objekt so angebracht, dass eine drahtlose Verbindung zu Basisstationen besonders einfach hergestellt werden kann. Empfangs-/Sendevorrichtungen können z.B. auf dem Dach eines mobilen Objekts angebracht werden. Die Empfangs-/Sendevorrichtungen ermöglichen die Verbindung des mobilen Netzwerks zum drahtlosen Netzwerk, wobei eine Verbindung basierend auf einem Verbindungsqualitätsparameter aufgebaut wird.

In Figur 2 beziehen sich die Bezugszeichen BS1 bis BS8 auf Basisstationen, die in den Ecken eines dreidimensionalen Würfels angebracht sind. Die Erfindung beschränkt sich aber nicht nur auf diese spezielle Form einer dreidimensionalen Anordnung der Basisstation. Die Erfindung bezieht sich auf jede denkbare beispielsweise dreidimensionale Anordnung von Basisstationen. Das Bezugszeichen MO bezieht sich auf ein mobiles Objekt, welches im Raum frei bewegbar ist, wobei sowohl die Position als auch die Orientierung des Objekts frei wählbar sind. Das Bezugszeichen MN bezieht sich auf das mobile Netzwerk, welches sich mit dem mobilen Objekt mitbewegt. Die Bezugszeichen ESV1 bis ESV3 beziehen sich auf Empfangs-/Sendevorrichtungen, welche am mobilen Objekt angebracht sind. Die bei der Beschreibung von Figur 1 dargestellten Möglichkeiten in Bezug auf Ausgestaltungsformen, wie z.B. des mobilen Netzwerks, der Basisstationen oder der Empfangs-/Sendevorrichtungen, gelten auch für die beispielhafte Darstellung von Figur 2.

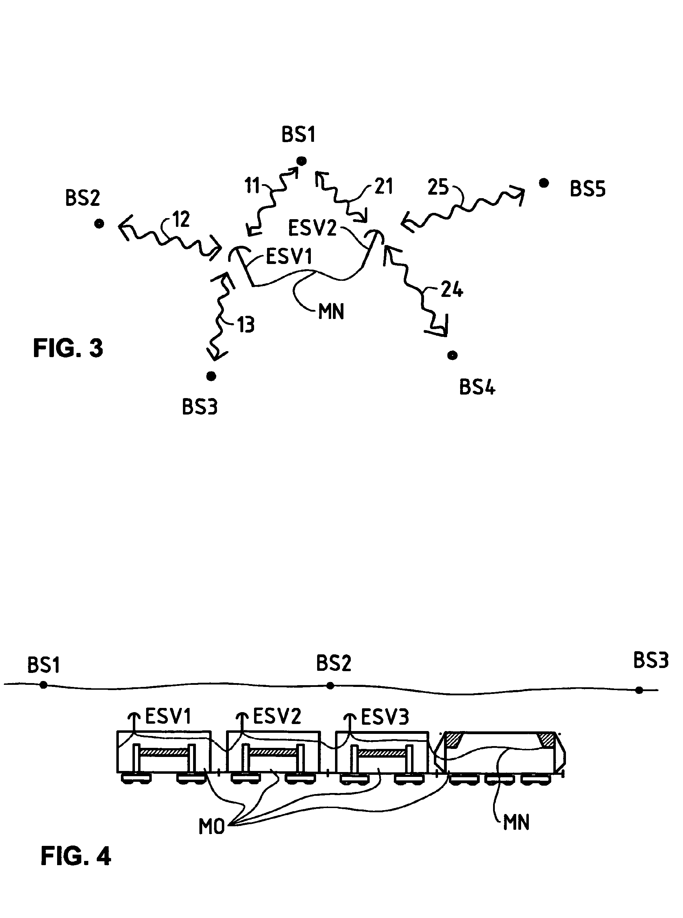

In Figur 3 beziehen sich die Bezugszeichen BS1 bis BS 5 auf Basisstationen und die Bezugszeichen ESV1 sowie ESV2 auf Empfangs-/Sendevorrichtungen des mobilen Objekts. In der erfindungsgemässen Lösung werden von der Empfangs-/Sendevorrichtung ESV1 Verbindungsqualitätsparameter der Verbindungen 11, 12 und 13 zu den Basisstationen BS1, BS2 und BS3 bestimmt. Analog werden in der erfindungsgemässen Lösung die Verbindungsqualitätsparameter der Verbindungen 21, 24 und 25 bestimmt. Diese Verbindungsqualitätsparameter können von den Empfangs-/Sendevorrichtungen einzeln gesammelt werden, sie können von einem in Figur 3 nicht gezeichneten Zentralmodul gesammelt werden oder sie können auch zwischen den Empfangs-/Sendevorrichtungen ausgetauscht werden. So ist es beispielsweise möglich, dass die Empfangs-/Sendevorrichtung ESV1 aus den Verbindungsqualitätsparametern der Verbindungen 11, 12 und 13 die Verbindung mit dem besten Verbindungsqualitätsparameter bestimmt. Der Verbindungsqualitätsparameter kann einen Signalenergieparameter, einen Datendurchsatzgeschwindigkeitsparameter, einen Stabilitätsparameter, einen Sicherheitsparameter, einen Ausrichtungsparameter der gegenseitigen Orientierung der Antennen oder irgend einen anderen Parameter, welcher als Qualitätsparameter geeignet ist, umfassen. Die Empfangs-/Sendevorrichtung ESV1 kann z.B. die Verbindung mit dem besten Verbindungsqualitätsparameter an die Empfangs-/Sendevorrichtung ESV2 übermitteln. Die Empfangs-/Sendevorrichtung ESV2 kann die analogen Daten an die Empfangs-/Sendevorrichtung ESV1 übermitteln. Anschliessend können die Empfangs-/Sendevorrichtungen ESV1 und ESV2 z.B. gemäss einem geeigneten Protokoll geeignete Verbindungen aufbauen. Es kann beispielsweise auch vorgesehen sein, dass eine Basisstation, welche schon mit einer Empfangs-/Sendevorrichtung verbunden ist, ein zusätzliches Sperrsignal erzeugt und so einer Empfangs-/Sendevorrichtung mitteilt, dass eine Verbindung nicht möglich ist. Anhand der gemessenen und der zeitliche sich ändernden Parameter kann beispielsweise im Zentralmodul ein Auswertungsmodul zur ständigen Auswertung der anfallenden Parameter vorgesehen sein, wobei das Auswertungsmodul Daten für die dynamische Umschaltung zwischen verschiedenen Verbindungen zur Verfügung stellt. Eine solche dynamische Umschaltung kann aber beispielsweise auch durch ein geeignetes Protokoll zwischen den beteiligten Empfangs-/Sendevorrichtungen realisiert werden.

In Figur 4 bezieht sich das Bezugszeichen MO auf das mobile Objekt, wobei das mobile Objekt eine Eisenbahn ist. Eine besonders vorteilhafte Anwendung der erfindungsgemässen Lösung ergibt sich für den Fall einer sehr langen Eisenbahnkomposition, wobei der Abstand zwischen Basisstationen beispielsweise ungefähr doppelt so gross ist wie die Länge der Zugskomposition. Das Bezugszeichen MN bezieht sich auf das mobile Netzwerk des mobilen Objekts. Das mobile Netzwerk der Eisenbahn kann sich über die gesamte Eisenbahn oder auch über bestimmte Wagengruppen der Eisenbahn erstrecken. Es ist auch möglich, dass auf der Eisenbahn mehrere mobile Netzwerke vorhanden sind. Das mobile Netzwerk kann so ausgestaltet sein, dass Eisenbahnwagen, welche zusätzlich an die Eisenbahn angehängt werden, automatisch an das mobile Netzwerk angeschlossen werden. Das mobile Netzwerk kann auch ein WLAN Netzwerk sein, wobei z.B. in jedem Eisenbahnwagen ein WLAN Netzwerk installiert ist, und wobei die WLAN Netzwerke der Eisenbahnwagen drahtlos und automatisch zu einem mobilen Netzwerk zusammengeschlossen werden und Endgeräte mit einer WLAN Funktionalität von Passagieren automatisch an das mobile Netzwerk angeschlossen werden. Die Bezugszeichen ESV1 bis ESV3 beziehen sich auf die Empfangs-/Sendevorrichtungen des mobilen Objekts. Die Empfangs-/Sendevorrichtungen können z.B. auf dem Dach der Eisenbahnwagen angebracht sein. Die Empfangs-/Sendevorrichtungen können auch so ausgestaltet sein, dass damit zugleich ein mobiles Netzwerk realisiert wird. Die Bezugszeichen BS1 bis BS3 beziehen sich auf Basisstationen des drahtlosen Netzwerks. Basisstationen können z.B. in definierten Abständen entlang der Bahnstrecke angebracht sein. Für Eisenbahnen mit einer Oberleitung zur Stromzuführung können die Basisstationen auf Masten der Oberleitung angebracht sein. In Figur 4 befindet sich die Basisstation BS1 hinter der Eisenbahn, die Basisstation BS2 auf gleicher Höhe wie die Eisenbahn und die Basisstation BS3 befindet sich vor der Eisenbahn. Für die hier gezeigte beispielhafte Anordnung kann z.B. die Empfangs-/Sendevorrichtung ESV1 mit der Basisstation BS1 verbunden sein. Bei der Bestimmung von Verbindungsqualitätsparametem zu definierten Zeitpunkten kann die Empfangs-/Sendevorrichtung ESV1 auch Parameter bezüglich einer Verbindung zur Basisstation BS2 bestimmen und so die Verbindung mit der Basisstation BS2 rechtzeitig ermöglichen.

## Patentansprüche

1. Verfahren zur Verbindung eines mobilen Netzwerks (MN) mit einem drahtlosen Netzwerk, wobei sich das mobile Netzwerk (MN) mit einem mobilen Objekt (MO) mitbewegt, und wobei das drahtlose Netzwerk eine Vielzahl von Basisstationen umfasst, **dadurch gekennzeichnet,**
**dass** zur Verbindung des mobilen Netzwerks (MN) mit dem drahtlosen Netzwerk im mobilen Objekt (MO) mindestens zwei, mit den Basisstationen drahtlos verbindbare Empfangs-/Sendevorrichtungen (ESV1,ESV2) verwendet werden, und
**dass** pro Empfangs-/Sendevorrichtung mindestens ein Verbindungsqualitätsparameter dieser Empfangs-/Sendevorrichtung zu mindestens einer Basisstation des drahtlosen Netzwerks bestimmt wird, und
**dass** basierend auf diesem mindestens einen Verbindungsqualitätsparameter mindestens eine Verbindung zwischen einer Empfangs-/Sendevorrichtung und einer Basisstation des drahtlosen Netzwerks aufgebaut wird.

2. Verfahren nach Anspruch 1, **dadurch gekennzeichnet, dass** das mobile Netzwerk (MN) gleichzeitig über mehrere Verbindungen zwischen Empfangs-/Sendevorrichtungen des mobilen Objekts (MO) und Basisstationen des drahtlosen Netzwerks verbunden wird.

3. Verfahren nach einem der Ansprüche 1 bis 2, **dadurch gekennzeichnet, dass** das mobile Objekt (MO) im Raum frei bewegt wird.

4. Verfahren nach einem der Ansprüche 1 bis 3, **dadurch gekennzeichnet, dass** das mobile Objekt (MO) in einer planaren oder in einer näherungsweise planaren Ebene bewegt wird.

5. Verfahren nach einem der Ansprüche 1 bis 4, **dadurch gekennzeichnet, dass** als Verbindungsqualitätsparameter ein Signalenergieparameter und/oder ein Datendurchsatzgeschwindigkeitsparameter verwendet wird.

6. Verfahren nach einem der Ansprüche 1 bis 5, **dadurch gekennzeichnet, dass** mindestens Teile des mobilen Netzwerks (MN) als drahtgebundenes LAN Netzwerk und/oder mindestens Teile des mobilen Netzwerks (MN) als drahtloses WLAN, UMTS und/oder GPRS Netzwerk ausgeführt werden.

7. Verfahren nach einem der Ansprüche 1 bis 6, **dadurch gekennzeichnet, dass** das drahtlose Netzwerk als ein WLAN, UMTS und/oder GPRS Netzwerk ausgeführt wird.

8. Verfahren nach einem der Ansprüche 1 bis 7, **dadurch gekennzeichnet, dass** der mindestens eine Verbindungsqualitätsparameter zu definierten Zeitpunkten oder nach Ablauf von definierten Zeitintervallen bestimmt wird.

9. Verfahren nach einem der Ansprüche 1 bis 8, **dadurch gekennzeichnet, dass** mittels eines Zentralmoduls und basierend auf dem mindestens einen Verbindungsqualitätsparameter diejenige mindestens eine Empfangs-/Sendevorrichtung bestimmt wird, welche mit mindestens einer Basisstation zur Verbindung des mobilen Netzwerks (MN) mit dem drahtlosen Netzwerk verbunden wird.

10. Verfahren nach Anspruch 9, **dadurch gekennzeichnet, dass** das Zentralmodul im drahtlosen Netzwerk angebracht wird.

11. Verfahren nach Anspruch 9, **dadurch gekennzeichnet, dass** das Zentralmodul im mobilen Objekt (MO) angebracht wird.

12. Verfahren nach einem der Ansprüche 1 bis 8, **dadurch gekennzeichnet, dass** mittels der mindestens einen Empfangs-/Sendevorrichtung und/oder mittels der mindestens einen Basisstation und basierend auf dem mindestens einen Verbindungsqualitätsparameter diejenige mindestens eine Empfangs-/Sendevorrichtung bestimmt wird, welche mit mindestens einer Basisstation zur Verbindung des mobilen Netzwerks (MN) mit dem drahtlosen Netzwerk verbunden wird.

13. System zur Verbindung eines mobilen Netzwerks (MN) mit einem drahtlosen Netzwerk, wobei sich das mobile Netzwerk (MN) mit einem mobilen Objekt (MO) mitbewegt, und wobei das drahtlose Netzwerk eine Vielzahl von Basisstationen umfasst, **dadurch gekennzeichnet,**
**dass** das mobile Netzwerk (MN) mit dem drahtlosen Netzwerk im mobilen Objekt (MO) über mindestens zwei Empfangs-/Sendevorrichtungen (ESV1,ESV2) drahtlos verbindbar ist, und
**dass** pro Empfangs-/Sendevorrichtung mindestens ein Verbindungsqualitätsparameter dieser Empfangs-/Sendevorrichtung zu mindestens einer Basisstation des drahtlosen Netzwerks bestimmbar ist, und
**dass** basierend auf diesem mindestens einen Verbindungsqualitätsparameter das mobile Netzwerk über mindestens eine Verbindung zwischen einer Empfangs-/Sendevorrichtung und einer Basisstation des drahtlosen Netzwerks mit dem drahtlosen Netzwerk verbindbar ist.

14. System nach Anspruch 13, **dadurch gekennzeichnet, dass** das mobile Netzwerk (MN) gleichzeitig über mehrere Verbindungen zwischen Empfangs-/Sendevorrichtungen des mobilen Objekts (MO) und Basisstationen des drahtlosen Netzwerks verbindbar ist.

15. System nach einem der Ansprüche 13 bis 14, **dadurch gekennzeichnet, dass** das mobile Objekt (MO) im Raum frei bewegbar ist.

16. System nach einem der Ansprüche 13 bis 15, **dadurch gekennzeichnet, dass** das mobile Objekt (MO) in einer planaren oder in einer näherungsweise planaren Ebene bewegbar ist.

17. System nach einem der Ansprüche 13 bis 16, **dadurch gekennzeichnet, dass** der Verbindungsqualitätsparameter ein Signalenergieparameter und/oder ein Datendurchsatzgeschwindigkeitsparameter ist.

18. System nach einem der Ansprüche 13 bis 17, **dadurch gekennzeichnet, dass** mindestens Teile des mobilen Netzwerks (MN) als drahtgebundenes LAN Netzwerk und/oder mindestens Teile des mobilen Netzwerks (MN) als drahtloses WLAN, UMTS und/oder GPRS Netzwerk ausgeführt sind.

19. System nach einem der Ansprüche 13 bis 18, **dadurch gekennzeichnet, dass** das drahtlose Netzwerk als ein WLAN, UMTS und/oder GPRS Netzwerk ausgeführt ist.

20. System nach einem der Ansprüche 13 bis 19, **dadurch gekennzeichnet, dass** der mindestens eine Verbindungsqualitätsparameter zu definierten Zeitpunkten oder nach Ablauf von definierten Zeitintervallen bestimmbar ist.

21. System nach einem der Ansprüche 13 bis 20, **dadurch gekennzeichnet, dass** mittels eines Zentralmoduls und basierend auf dem mindestens einen Verbindungsqualitätsparameter diejenige mindestens eine Empfangs-/Sendevorrichtung bestimmbar ist, welche mit mindestens einer Basisstation zur Verbindung des mobilen Netzwerks (MN) mit dem drahtlosen Netzwerk verbindbar ist.

22. System nach Anspruch 21, **dadurch gekennzeichnet, dass** das Zentralmodul im drahtlosen Netzwerk angebracht ist.

23. System nach Anspruch 21, **dadurch gekennzeichnet, dass** das Zentralmodul im mobilen Objekt (MO) angebracht ist.

24. System nach einem der Ansprüche 13 bis 20, **dadurch gekennzeichnet, dass** mittels der mindestens einen Empfangs-/Sendevorrichtung und/oder mittels der mindestens einen Basisstation und basierend auf dem mindestens einen Verbindungsqualitätsparameter diejenige mindestens eine Empfangs-/Sendevorrichtung bestimmbar ist, welche mit mindestens einer Basisstation zur Verbindung des mobilen Netzwerks (MN) mit dem drahtlosen Netzwerk verbindbar ist.

## Claims

1. Method of connecting a mobile network (MN) to a wireless network, the mobile network (MN) moving along with a mobile object (MO), and the wireless network comprising a multiplicity of base stations, **characterised**
**in that** for connection of the mobile network (MN) to the wireless network at least two receiving/transmitting devices (ESV1,ESV2), wirelessly connectible to the base stations, in the mobile object (MO) are used, and
**in that** per receiving/transmitting device at least one connection quality parameter for this receiving/transmitting device to at least one base station of the wireless network is determined, and
**in that** based on this at least one connection quality parameter at least one connection is established between a receiving/transmitting device and a base station of the wireless network.

2. Method according to claim 1, **characterised in that** the mobile network (MN) is simultaneously connected via a multiplicity of connections between receiving/transmitting devices of the mobile object (MO) and base stations of the wireless network.

3. Method according to one of the claims 1 to 2, **characterised in that** the mobile object (MO) is freely moved in space.

4. Method according to one of the claims 1 to 3, **characterised in that** the mobile object (MO) is moved in a planar or approximately planar plane.

5. Method according to one of the claims 1 to 4, **characterised in that** used as the connection quality parameter is a signal energy parameter and/or a data throughput rate parameter.

6. Method according to one of the claims 1 to 5, **characterised in that** at least portions of the mobile network (MN) are implemented as wired LAN network and/or at least portions of the mobile network (MN) as wireless WLAN, UMTS and/or GPRS network.

7. Method according to one of the claims 1 to 6, **characterised in that** the wireless network is implemented as a WLAN, UMTS and/or GPRS network.

8. Method according to one of the claims 1 to 7, **characterised in that** the at least one connection quality parameter is determined at defined points in time or after expiration of defined time intervals.

9. Method according to one of the claims 1 to 8, **characterised in that** determined by means of a central module and on the basis of the at least one connection quality parameter is which at least one receiving/transmitting device is connected to at least one base station for connection of the mobile network (MN) to the wireless network.

10. Method according to claim 9, **characterised in that** the central module is provided in the wireless network.

11. Method according to claim 9, **characterised in that** the central module is provided in the mobile object (MO).

12. Method according to one of the claims 1 to 8, **characterised in that** determined by means of the at least one receiving/transmitting device and/or by means of the at least one base station and based on the at least one connection quality parameter is which at least one receiving/transmitting device is connected to at least one base station for connection of the mobile network (MN) to the wireless network.

13. System for connection of a mobile network (MN) to a wireless network, the mobile network (MN) moving along with a mobile object (MO), and the wireless network comprising a multiplicity of base stations, **characterised**
**in that** the mobile network (MN) is wirelessly connectible to the wireless network in the mobile object (MO) via at least two receiving/transmitting devices (ESV1,ESV2), and
**in that** per receiving/transmitting device at least one connection quality parameter is definable for this receiving/transmitting device to at least one base station of the wireless network, and
**in that** based on this at least one connection quality parameter, the mobile network is connectible to the wireless network via at least one connection between a receiving/transmitting device and a base station of the wireless network.

14. System according to claim 13, **characterised in that** the mobile network (MN) is simultaneously connectible via a multiplicity of connections between receiving/transmitting devices of the mobile object (MO) and base stations of the wireless network.

15. System according to one of the claims 13 to 14, **characterised in that** the mobile object (MO) is freely movable in space.

16. System according to one of the claims 13 to 15, **characterised in that** the mobile object (MO) is movable in a planar or approximately planar plane.

17. System according to one of the claims 13 to 16, **characterised in that** the connection quality parameter is a signal energy parameter and/or a data throughput rate parameter.

18. System according to one of the claims 13 to 17, **characterised in that** at least portions of the mobile network (MN) are implemented as wired LAN network and/or at least portions of the mobile network (MN) as wireless WLAN, UMTS and/or GPRS network.

19. System according to one of the claims 13 to 18, **characterised in that** the wireless network is implemented as a WLAN, UMTS and/or GPRS network.

20. System according to one of the claims 13 to 19, **characterised in that** the at least one connection quality parameter is able to be determined at defined points in time or after expiration of defined time intervals..

21. System according to one of the claims 13 to 20, **characterised in that** able to be determined by means of a central module and on the basis of the at least one connection quality parameter is which at least one receiving/transmitting device is connectible to at least one base station for connection of the mobile network (MN) to the wireless network.

22. System according to claim 21, **characterised in that** the central module is provided in the wireless network.

23. System according to claim 21, **characterised in that** the central module is provided in the mobile object (MO).

24. System according to one of the claims 13 to 20, **characterised in that** able to be determined by means of the at least one receiving/transmitting device and/or by means of the at least one base station and on the basis of the at least one connection quality parameter is which at least one receiving/transmitting device is connectible to at least one base station for connection of the mobile network (MN) to the wireless network.

## Revendications

1. Procédé pour la connexion d'un réseau mobile (MN) avec un réseau sans fil, le réseau mobile (MN) étant déplacé avec un objet mobile (MO) et le réseau sans fil comprenant un grand nombre de postes de base, **caractérisé**
**en ce que** pour la connexion du réseau mobile (MN) au réseau sans fil, il est utilisé dans l'objet mobile (MO) au moins deux dispositifs de réception/émission reliables sans fil aux postes de base (ESV1, ESV2) et
**en ce que** par dispositif de réception/émission, il est déterminé un paramètre de qualité de connexion de ce dispositif de réception/émission à au moins un poste de base du réseau sans fil, et
**en ce qu'**il est établi sur au moins un paramètre de qualité de connexion au moins une connexion entre le dispositif de réception/émission et un poste de base du réseau sans fil.

2. Procédé selon la revendication 1, **caractérisé en ce que** le réseau mobile (MN) est relié par plusieurs connexions entre le dispositif émission/réception de l'objet mobile (MO) et des postes mobiles du réseau sans fil.

3. Procédé selon l'une des revendications 1 à 2, **caractérisé en ce que** l'objet mobile (MO) se déplace librement dans l'espace.

4. Procédé selon l'une des revendications 1 à 3, **caractérisé en ce que** l'objet mobile (MO) est déplacé dans un plan planaire ou approximativement planaire.

5. Procédé selon l'une des revendications 1 à 4, **caractérisé en ce qu'**en tant que paramètre de qualité de connexion, il est utilisé un paramètre d'énergie de signal et/ou un paramètre de vitesse de débit de données.

6. Procédé selon l'une des revendications 1 à 5, **caractérisé en ce qu'**au moins des parties du réseau mobile (MN) sont configurées en tant que réseau LAN filaire et/ou au moins des parties du réseau mobile (MN) sont réalisées en tant que réseau sans fil GPRS et/ou UMTS, WLAN.

7. Procédé selon l'une des revendications 1 à 6, **caractérisé en ce que** le réseau sans fil est réalisé comme un réseau WLAN, UMTS et/ou GPRS.

8. Procédé selon l'une des revendications 1 à 7, **caractérisé en ce qu'**au moins un paramètre de qualité de connexion est déterminé à des moments définis ou à l'expiration d'intervalles de temps définis.

9. Procédé selon l'une des revendications 1 à 8, **caractérisé en ce qu'**au moyen d'un module central et sur la base d'au moins un paramètre de qualité de jonction, il est déterminé au moins un dispositif d'émission/réception, lequel est relié à au moins un poste de base pour la connexion du réseau mobile (MN) au réseau sans fil.

10. Procédé selon la revendication 9, **caractérisé en ce que** le module central est aménagé dans le réseau sans fil.

11. Procédé selon la revendication 9, **caractérisé en ce que** le module central est aménagé dans l'objet mobile (MO):

12. Procédé selon l'une des revendications 1 à 8, **caractérisé en ce qu'**au moyen d'au moins un dispositif d'émission/réception et/ou au moyen d'au moins un poste de base et sur la base d'au moins un paramètre de qualité de connexion, il est déterminé au moins un dispositif d'émission/réception qui est relié par au moins un poste de base pour la connexion du réseau mobile (MN) au réseau sans fil.

13. Système pour la connexion d'un réseau mobile (MN) à un réseau sans fil, le réseau mobile (MN) étant déplacé avec un objet mobile (MO) et le réseau sans fil comprenant un grand nombre de postes de base, **caractérisé**
**en ce que** le réseau mobile (MN) est reliable sans fil au réseau sans fil dans l'objet mobile (MO) par au moins deux dispositifs d'émission/réception (ESV1, ESV2), et
**en ce que** par dispositif de réception/émission, il est déterminable un paramètre de qualité de connexion de ce dispositif de réception/émission à au moins un poste de base du réseau sans fil, et
**en ce qu'**en se basant sur au moins ce paramètre de qualité de connexion, le réseau mobile peut être relié au réseau sans fil par au moins une connexion entre un dispositif de réception/émission et un poste de base du réseau sans fil.

14. Système selon l'une des revendications 13 à 14, **caractérisé en ce que** le réseau mobile (MN) est relié par plusieurs connexions entre le dispositif émission/réception de l'objet mobile (MO) et des postes mobiles du réseau sans fil.

15. Système selon l'une des revendications 13 à 14, **caractérisé en ce que** l'objet mobile (MO) est mobile librement dans l'espace.

16. Système selon l'une des revendications 13 à 16, **caractérisé en ce que** l'objet mobile (MO) est déplacé dans un plan planaire ou approximativement planaire.

17. Système selon l'une des revendications 13 à 16, **caractérisé en ce que** le paramètre de qualité de connexion est un paramètre d'énergie de signal et/ou un paramètre de vitesse de débit de données.

18. Système selon l'une des revendications 13 à 17, **caractérisé en ce qu'**au moins des parties du réseau mobile (MN) sont configurées en tant que réseau LAN filaire et/ou au moins des parties du réseau mobile (MN) sont réalisées en tant que réseau sans fil GPRS et/ou UMTS, WLAN.

19. Système selon l'une des revendications 13 à 18, **caractérisé en ce que** le réseau sans fil est réalisé comme un réseau WLAN, UMTS et/ou GPRS.

20. Système selon l'une des revendications 13 à 19, **caractérisé en ce qu'**au moins un paramètre de qualité de connexion est déterminé à des moments définis ou à l'expiration d'intervalles temps définis.

21. Système selon l'une des revendications 13 à 20, **caractérisé en ce qu'**au moyen d'un module central et sur la base d'au moins un paramètre de qualité de connexion, il est déterminé au moins un dispositif d'émission/réception, lequel est relié à au moins un poste de base pour la connexion du réseau mobile (MN) au réseau sans fil.

22. Système selon la revendication 21, **caractérisé en ce que** le module central est logé dans le réseau sans fil.

23. Système selon la revendication 21, **caractérisé en ce que** le module central est logé dans l'objet mobile (MO).

24. Système selon l'une des revendications 13 à 20, **caractérisé en ce qu'**au moyen d'au moins un dispositif d'émission/réception et/ou au moyen d'au moins un poste de base et sur la base d'au moins un paramètre de qualité de connexion, il est déterminé au moins un dispositif d'émission/réception qui est reliable par au moins un poste de base pour la connexion du réseau mobile (MN) au réseau sans fil.
